# FASCICULE DE BREVET EUROPEEN

(11) **EP 0 686 609 B1**
(45) Date de publication et mention de la délivrance du brevet: **24.03.1999**
(21) Numéro de dépôt: 95401284.5
(22) Date de dépôt: 01.06.1995
(51) Int. Cl.: C03C 8/14

(54) **Composition et procédé d'émaillage d'articles métalliques**
Zusammensetzung und Verfahren zur Emaillierung von Metallgegenständen
Composition and process for enamelling metallic articles

(30) Priorité: 08.06.1994 FR 9407001
(43) Date de publication de la demande: 13.12.1995
(73) Titulaire: SEB S.A., 69130 Ecully (FR)
(72) Inventeur: Piera, Henri, F-74150 Rumilly (FR)
(74) Mandataire: Keib, Gérard

(56) Documents cités:
- EP-A- 0 522 401
- GLASS AND CERAMICS, vol. 38, no. 1, Janvier 1981 NEW YORK US, pages 29-31, Y.I.BAKALIN ET AL. 'Improving the Quality of Enamels for Aluminum Construction Goods.'
- DATABASE WPI Section Ch, Week 8133 Derwent Publications Ltd., London, GB; Class J04, AN 81-59461D & JP-A-56 078 450 (MATSUSHITA ELEC IND KK) , 27 Juin 1981
- PATENT ABSTRACTS OF JAPAN vol. 011 no. 259 (C-441) ,21 Août 1987 & JP-A-62 059552 (NIPPON FUEROO KK) 16 Mars 1987,

## Description

L'invention concerne l'utilisation d'une composition pour l'émaillage d'articles métalliques et un procédé d'émaillage d'un article métallique.

Il est connu de l'homme du métier que tous les alliages d'aluminium ne sont pas émaillables.

En effet, trois conditions sont nécessaires pour pouvoir émailler une pièce métallique à base d'alliage d'aluminium ou revêtue d'aluminium. La première condition évidente et irrémédiable est que le point de fusion de l'alliage ne soit pas trop voisin du point de vitrification de l'émail et, de toute façon, supérieur à celui-ci.

La deuxième condition est que le système de transformation du métal en pièce semi-ouvrée ou définitive n'apporte pas d'hétérogénéité à celui-ci.

Ainsi, par exemple, un alliage de fonderie remplissant la première et la troisième conditions (exposée ci-dessous) ne s'émaillera pas s'il contient des occlusions d'air dues au procédé de coulée du type notamment par injection (même sous vide).

Le seul système de transformation du métal en pièce semi-ouvrée ou définitive donnant, au jour d'aujourd'hui, de bons résultats est le moulage par gravité ou procédé 〈〈 coquille 〉〉.

La troisième cause de l'impossibilité d'émailler des pièces métalliques à base d'alliage d'aluminium ou revêtues d'alliage d'aluminium est que certains éléments constitutifs de l'alliage sont néfastes à l'émaillage parce qu'ils nuisent à l'adhérence de l'émail sur l'alliage.

Parmi ces éléments rendant l'alliage non émaillable, les plus connus de l'homme du métier sont le béryllium, le magnésium, le cadmium, l'indium, l'étain, le plomb et le bismuth.

Le plus connu par l'homme du métier, car largement utilisé dans les alliages d'aluminium, est le magnésium.

Il est reconnu par l'homme du métier qu'une teneur supérieure à 100 ppm dans l'alliage nuit à l'adhérence de l'émail, cette mauvaise adhérence se traduisant par des saints ou défaut d'émail dans le temps et un résultat négatif aux tests d'adhérence au trichlorure d'antimoine.

En effet, d'après des études d'émaillabilité, cet élément migrerait à la surface du métal, à l'interface émail/métal et s'oxyderait préférentiellement aux autres éléments. L'oxyde MgO en résultant est non seulement non dissout par la matrice vitreuse mais retarde la dissolution des autres oxydes métalliques et altère ainsi fortement l'adhérence de l'émail.

De plus, la couche enrichie en magnésium est très sensible à la corrosion, l'oxydation se fait par une augmentation de volume produisant des forces internes suffisantes, à l'interface, pour décoller l'émail et provoquer des défauts semblables aux phénomènes de "coups d'ongles", connus dans le domaine de l'émaillage de l'acier.

Des traitements de surface coûteux en fonctionnement et en investissement et/ou en rejet, telle que la chromatation, décrite par Glass and Ceramics, vol.38, No.1, Janvier 1981, pages 29-31, Bakalin et al. "Improving the quality of enamels for aluminium constructions goods". sont susceptibles de rendre émaillables des alliages qui initialement ne l'étaient pas.

Un objet de la présente invention est donc de proposer l'utilisation d'une composition destinée à émailler des articles métalliques qui pallie les inconvénients ou limites de l'état de la technique.

En particulier, l'objet de la présente invention est de proposer l'utilisation d'une composition destinée à émailler des surfaces métalliques de tout type, et notamment celles connues pour n'étant pas émaillables.

Un autre objet de la présente invention est de proposer un procédé d'émaillage d'un article métallique comportant une surface reconnue par l'homme du métier comme n'étant pas émaillable.

A cet effet, l'invention propose l'utilisation pour l'émaillage sans traitement de chromatation préalable, d'articles en alliage d'aluminium ou en acier revêtu d'alliage d'aluminium, d'une composition constituée par une barbotine de fritte d'émail sans plomb et comprenant au moins un oxyde de fer.

Les autres caractéristiques et avantages de la présente invention seront bien compris à la lecture de la description qui suit.

La présente invention a donc pour objet de rendre émaillable des alliages non reconnus comme tels par l'homme du métier.

On connaît déjà de nombreuses compositions destinées à émailler des articles métalliques. De telles compositions renferment pour la plupart une barbotine de fritte d'émail sans plomb le plus souvent vanadique.

Selon l'invention, la composition comprend au moins un oxyde de fer choisi dans le groupe constitué par FeO, Fe₃O₄, FE₂O₃.

En effet, il a été constaté que le degré d'adhérence mécanique (essai aux chocs) de la couche d'émail sur des alliages de type 3005, 3004, 5754 (alliages conformes aux compositions et caractéristiques décrites dans la norme NFA 50.451) et le résultat au test du trichlorure d'antimoine sont fonction de l'état de réactivité de l'oxyde de fer.

Ainsi le degré d'adhérence est croissant en passant de Fe₃O₄ à FeO et de FeO à Fe₂O₃.

Néanmoins, le pouvoir de dissolution de l'émail choisi vis à vis des différents oxydes métalliques peut venir changer l'ordre précité.

De même, la température de vitrification, ainsi que sa durée, ont une influence sur l'adhérence puisque favorisant ou non la migration des éléments et leur oxydation.

Avantageusement, la proportion en poids d'oxyde de fer dans la composition conforme à l'invention doit être supérieure ou égale à 1 % d'émaux avec un optimum pouvant varier de 5 à 10 % suivant l'émail choisi.

Ainsi, les émaux GL 4348 (contenant du cadmium) et GL 4352 (sans cadmium), tous deux commercialisés par la société FERRO, émaux "basse température" se vitrifiant à partir de 480°C avec un optimum à 520°C, peuvent être appliqués sur les alliages à fort taux de magnésium du type 5754 avec 1 % d'oxyde de fer quel que soit le degré d'oxydation de l'oxyde et ceci avec un bon résultat au niveau de l'adhérence mécanique.

Ces émaux ayant des résistances chimiques médiocres, le test d'adhérence au trichlorure d'antimoine n'est pas significatif.

On comprend les avantages que représentent la possibilité d'émailler des alliages dits non émaillables.

En effet, non seulement il s'agit d'alliages courants, mais ces alliages ont des caractéristiques mécaniques supérieures sans commune mesure avec les alliages dits émaillables comme le montrent les résultats indiqués dans le tableau suivant :

| Alliages dits émaillables | mini A % | Rm (MPa) | mini RO2 (MPa) |
|---|---|---|---|
| 3003* | 28 | 90 - 130 | 35 |
| 4006* | 30 | 95 - 130 | 40 |

| Alliages dits non émaillables | | | |
|---|---|---|---|
| 3004* | 18 | 155 - 200 | 60 |
| 5754* | 20 | 190 - 240 | 80 |

| | | | |
|---|---|---|---|
| * : suivant la norme NFA 50.451 | | | |

A titre d'exemple non limitatif, on peut mentionner la formulation d'une composition d'émaillage adhérant sur un alliage non émaillable :

| | |
|---|---|
| Email GL 4316 de FERRO (silico alumino vanadate d'alcalin et d'alcalinoterreux) | 100 |
| Acide borique | 4 |
| Métasilicate de soude | 1 |
| Potasse | 1 |
| Oxyde de fer Bayferrox 303 T | 10 |
| Eau | 56 |

Finesse refus 0,2 au 16900 BAYER soit 2 % de particules d'émail au dessus de 38 micromètres
Densité d'application 1,78
Cuisson 560°C 5 minutes de palier.

Par ailleurs, la présence de certains pigments minéraux dans la composition d'émaillage altère l'adhérence sur les alliages reconnus comme non émaillables ; c'est le cas, par exemple, des bleus cobalt ou des verts cobalt-chrome ou chrome.

L'invention permet de résoudre ce problème et rend possible l'émaillage de ces alliages avec les barbotines d'émail pigmentées en bleu ou en vert, ou avec d'autres pigments défavorables à l'adhérence de l'émail, en disposant une sous couche (d'environ 10 microns) d'une barbotine d'émail sans plomb contenant une certaine proportion de pigments d'oxyde de fer, le choix de l'oxyde étant le meilleur compromis entre l'adhérence de l'émail et la couleur de la surcouche.

Ainsi, pour des teintes pastel, on évitera d'utiliser une sous couche noire d'oxyde de fer FeO.

On comprend de tout ce qui précède que la composition conforme à la présente invention peut non seulement émailler des articles métalliques, en aluminium revêtus d'aluminium, ou en acier revêtu d'aluminium ou d'alliage d'aluminium, connus pour étant émaillables, mais également des articles métalliques en alliage d'aluminium ou revêtus d'alliage d'aluminium connus comme étant non émaillables.

L'invention concerne également un procédé d'émaillage d'un article métallique.

Il comprend les étapes connues consistant à :
- traiter la surface de l'article metallique émaillé, par un dégraissage suivi d'un satinage alcalin, d'une passivation nitrique éventuelle et d'un rinçage à l'eau déminéralisée ;
- appliquer par voie liquide, sur l'article métallique au moins une couche d'une composition d'émaillage.

Selon l'invention, on ajoute à la composition, au moment du broyage, au moins un oxyde de fer et on procède ensuite à l'application de la barbotine d'émail par voie liquide et à la vitrification par cuisson de l'émail appliqué sur l'article.

## Revendications

1. Utilisation pour l'émaillage sans traitement de chromatation préalable d'articles en alliage d'aluminium ou en acier revêtu d'alliage d'aluminium, d'une composition constituée par une barbotine de fritte d'émail sans plomb et comprenant au moins un oxyde de fer.

2. Utilisation selon la revendication 1, caractérisée en ce que l'alliage d'aluminium comprend au moins un élément choisi dans le groupe constitué par le béryllium, le magnésium, le cadmium, l'indium, l'étain, le plomb, le bismuth.

3. Utilisation selon l'une quelconque des revendications 1 ou 2, caractérisée en ce que l'oxyde de fer est choisi dans le groupe constitué par FeO, Fe₃O₄, Fe₂O₃.

4. Utilisation selon l'une quelconque des revendications 1 à 3, caractérisée en ce que l'oxyde de fer est choisi en fonction du degré d'adhérence souhaité.

5. Utilisation selon l'une quelconque des revendications 1 à 4, caractérisée en ce que la proportion en poids d'oxyde de fer est supérieure à 1% d'émaux.

6. Utilisation selon l'une quelconque des revendications 1 à 5, caractérisée en ce que la proportion en poids d'oxyde de fer varie entre 5% et 10% d'émaux.

7. Procédé d'émaillage sans traitement de chromatation d'un article en alliage d'aluminium ou en acier revêtu d'alliage d'aluminium, consistant à appliquer par voie liquide sur ledit article au moins une couche d'une composition d'émaillage, caractérisé en ce qu'on ajoute à la composition, au moment du broyage, au moins un oxyde de fer et on procède ensuite à l'application de la barbotine d'émail par voie liquide et à la vitrification par cuisson de l'émail appliqué sur l'article.

## Claims

1. Use, for enamelling articles of aluminium alloy or of aluminium alloy coated steel, without prior chromation treatment, of a composition constituted by an unleaded enamel frit slip and containing at least one iron oxide.

2. Use according to claim 1, characterised in that the aluminium alloy comprises at least one element selected from the group constituted by beryllium, magnesium, cadmium, indium, tin, lead, and bismuth.

3. Use according to any one of claims 1 or 2, characterised in that the iron oxide is selected from the group constituted by FeO, Fe₃0₄, Fe₂0₃.

4. Use according to any one of claims 1 to 3, characterised in that the iron oxide is selected in dependence on the required degree of adhesion.

5. Use according to any one of claims 1 to 4, characterised in that the proportion of iron oxide by weight is greater than 1% of enamels.

6. Use according to any one of claims 1 to 5, characterised in that the proportion of iron oxide by weight varies between 5% and 10% of enamels.

7. A process for enamelling an article of aluminium alloy or of aluminium alloy coated steel, without chromation treatment, consisting in applying in liquid form to the said article at least one coat of an enamelling composition, characterised in that at least one iron oxide is added to the composition at the time of milling and the enamel slip is then applied in liquid form and vitrification is carried out by firing the enamel applied to the article.

## Patentansprüche

1. Verwendung einer Zusammensetzung, welche aus einem Schlicker einer bleifreien Emailfritte gebildet ist und zumindest ein Eisenoxid aufweist, zum Emaillieren ohne vorheriges Chromatieren von Gegenständen aus einer Aluminiumlegierung oder aus einem mit einer Aluminiumlegierung beschichteten Stahl.

2. Verwendung nach Anspruch 1, dadurch gekennzeichnet, daß die Aluminiumlegierung zumindest ein Element aufweist, welches aus der aus Beryllium, Magnesium, Cadmium, Indium, Zinn, Blei und Wismut bestehenden Gruppe ausgewählt ist.

3. Verwendung nach einem der Ansprüche 1 oder 2, dadurch gekennzeichnet, daß das Eisenoxid aus der aus FeO, Fe₃O₄ und Fe₂O₃ bestehenden Gruppe ausgewählt ist.

4. Verwendung nach einem der Ansprüche 1 bis 3, dadurch gekennzeichnet, daß das Eisenoxid in Abhängigkeit von dem gewünschten Haftfähigkeitsgrad ausgewählt ist.

5. Verwendung nach einem der Ansprüche 1 bis 4, dadurch gekennzeichnet, daß der Gewichtsanteil des Eisenoxids, bezogen auf die Emails, höher als 1 % ist.

6. Verwendung nach einem der Ansprüche 1 bis 5, dadurch gekennzeichnet, daß der Gewichtsanteil des Eisenoxids, bezogen auf die Emails, zwischen 5 % und 10 % variiert.

7. Verfahren zum Emaillieren ohne Chromatierbehandlung eines Gegenstandes aus einer Aluminiumlegierung oder aus einem mit einer Aluminiumlegierung beschichteten Stahl, welches daraus besteht, auf dem Gegenstand im Naßverfahren zumindest eine Schicht einer Emaillierungszusammensetzung aufzubringen, dadurch gekennzeichnet, daß der Zusammensetzung beim Vermahlen zumindest ein Eisenoxid zugesetzt wird, und daß danach der Emailschlicker im Naßverfahren aufgebracht und das auf den Gegenstand aufgebrachte Email durch Einbrennen verglast wird.
